# EUROPÄISCHE PATENTSCHRIFT

(11) **EP 2 723 565 B1**
(45) Veröffentlichungstag und Bekanntmachung des Hinweises auf die Patenterteilung: **11.03.2015**
(21) Anmeldenummer: 12730870.8
(22) Anmeldetag: 18.06.2012
(51) Int. Cl.: B32B 27/08, B32B 27/36, B65D 81/34, C09D 4/06, C09D 133/00

(54) **BESCHICHTETE POLYMERFOLIEN MIT SAUERSTOFFBARRIEREEIGENSCHAFTEN**
COVERED POLYMER FILMS HAVING OXYGEN BARRIER PROPERTIES
FILMS DE POLYMERS RECOUVERTS AYANT DES PROPRIÉTÉS DE BARRIÈRE À L'OXYGÈNE

(30) Priorität: 22.06.2011 EP 11170996
(43) Veröffentlichungstag der Anmeldung: 30.04.2014
(73) Patentinhaber: BASF SE, 67056 Ludwigshafen (DE)
(72) Erfinder: PIETSCH, Ines, 67346 Speyer (DE); WEISS, Axel, 67346 Speyer (DE); MICHL, Kathrin, 67063 Ludwigshafen (DE); PREISHUBER-PFLÜGL, Peter, 68163 Mannheim (DE); SMIT, Theo, 69117 Heidelberg (DE)
(86) Internationale Anmeldenummer: PCT/EP2012/061547
(87) Internationale Veröffentlichungsnummer: WO 2012/175433

(56) Entgegenhaltungen:
- WO-A1-03/104327

## Beschreibung

Die Erfindung betrifft beschichtete Polymerfolien, herstellbar durch Beschichten von Polymerfolien mit einer wässrigen Zusammensetzung, enthaltend (A) ein durch radikalische Polymerisation erhaltenes Polymerisat, welches zu 10 bis 80 Gew.-% aus ethylenisch ungesättigten Säureanhydriden oder ethylenisch ungesättigten Dicarbonsäuren, deren Carbonsäuregruppen eine Anhydridgruppe bilden können, besteht und (B) ein Alkanolamin mit mindestens zwei Hydroxylgruppen. Die Beschichtung verleiht der Polymerfolie eine Sauerstoffbarriere und kann insbesondere zur Herstellung von Verpackungen verwendet werden.

Beim Verpacken von oxidationsempfindlichen oder sauerstoffempfindlichen Produkten ist es wichtig, dass die verwendeten Verpackungsmaterialien Sauerstoffbarriereeigenschaften besitzen, d.h. dass sie eine möglichst geringe Transmission bzw. eine möglichst geringe Permeabilität für Sauerstoff aufweisen. Da als Verpackungsmaterialien verwendete Polymerfolien, beispielsweise aus Polyolefinen wie Polyethylen oder orientiertem Polypropylen oder aus Polyestern wie z.B. aus Polyethylenterephtalat in der Regel in reiner, unbeschichteter Form eine relativ hohe Permeabilität für Sauerstoff zeigen, sind verschiedene Maßnahmen vorgeschlagen worden, die Sauerstoffbarriereeigenschaften der Verpackungsmaterialien zu erhöhen.

Die WO 03/068869 beschreibt ein Verfahren zur Herstellung von Verpackungsmitteln mit Sauerstoffsperreigenschaften, wobei ein Trägermaterial mit einer polymerisierbaren Verbindung beschichtet wird und die Verbindung anschließend auf dem Trägermaterial polymerisiert wird. Die EP 2 014 730 beschreibt eine Beschichtungszusammensetzung zur Bildung eines Gasbarrierefilms auf Basis eines Polycarbonsäurepolymers, welches mittels einer Zinkverbindung vernetzt wird. Die WO 07/002322 beschreibt beschichtete Polymerfilme mit Sauerstoffbarriereeigenschaften. Die Beschichtungszusammensetzung ist eine Lösung eines Maleinsäure/Acrylsäure Copolymers und eines Vinylalkohol/Vinylamin Copolymers. Nach der Beschichtung vernetzen die beiden Copolymere der Beschichtungszusammensetzung auf dem Polymerfilm. Die WO 98/31719 beschreibt Beschichtungszusammensetzungen für Barrierebeschichtungen. Die Zusammensetzungen enthalten ein ethylenisch ungesättigtes Säuremonomer und ein Polyamin, welches einen eingebauten Vernetzer enthält. Nach der Beschichtung erfolgt eine Vernetzung durch Auslösen einer radikalisch induzierten Polymerisation. Beschichtungen mit Sauerstoff- oder Gasbarriereeigenschaften werden auch beschrieben in EP 890432 (WO 98/09813) und EP 1683825 (WO 2005/037898).

Bisher bekannte Verpackungsfolien mit Sauerstoffbarriereeigenschaften sind noch nicht in jeder Hinsicht zufriedenstellend. Häufig sind die Permeabilitäten für Sauerstoff noch nicht für alle Anwendungen ausreichend niedrig oder Barrierebeschichtungen mit Filmen auf Polymerbasis sind zu spröde und nicht ausreichend flexibel, sodass eine dauerhafte Barrierewirkung wegen der Gefahr von Rissbildungen nicht gewährleistet ist. Es kann dann beim Knicken oder Falten im Bereich von Faltstellen zu einer Beschädigung des Barrierefilms und dadurch bedingter ungenügender Barrierewirkungen kommen. Sauerstoffbarriereschichten auf der Basis von chlorfreien Polymeren mit Säuregruppen zeigen häufig bei niedriger Luftfeuchtigkeit akzeptable Barrierewirkungen, die Barrierewirkung lässt aber bei höherer Luftfeuchtigkeit (größer 80% relative Luftfeuchtigkeit) häufig deutlich nach. Einige der bekannten Barriereschichten benötigen zu deren Bildung Schwermetallsalze, was insbesondere für Anwendungen im Bereich von Lebensmittelverpackungen aus gesundheitlichen Gründen häufig unerwünscht ist. Andere bekannte Beschichtungszusammensetzungen sind 2-Komponentensysteme, bei denen zwei Komponenten bis zur Auftragung auf das Substrat getrennt gehalten werden müssen, da sie ansonsten vorzeitig vernetzen würden, also als 1-Komponentenystem nicht lagerstabil sind.

Aufgabe der vorliegenden Erfindung war es, weitere Zusammensetzungen und Verfahren zur Verfügung zu stellen, welche die Herstellung von Verpackungen mit guten Sauerstoffbarriereeigenschaften, insbesondere auch bei höherer Luftfeuchtigkeit und im Bereich von Falten, Knicken und Ecken ermöglicht. Die Verpackungen sollten dabei möglichst gut temperaturresistent, flexibel und blockfest sein und möglichst keine gesundheitsbedenklichen Stoffe wie z.B. Metalle enthalten. Gewünscht ist insbesondere die Anwendung einer Beschichtungszusammensetzung in Form eines chlorfreien, metallsalzfreien, lagerstabilen 1-Komponentensystems.

Gegenstand der Erfindung ist eine beschichtete Polymerfolie, herstellbar durch Beschichten einer Polymerfolie mit einer wässrigen Zusammensetzung, enthaltend
A) ein durch radikalische Polymerisation erhaltenes Polymerisat, welches zu 10 bis 80 Gew.-% aus mindestens einer Verbindung, ausgewählt aus ethylenisch ungesättigten Säureanhydriden und ethylenisch ungesättigten Dicarbonsäuren, deren Carbonsäuregruppen eine Anhydridgruppe bilden können, besteht und
B) mindestens ein Alkanolamin mit mindestens zwei Hydroxylgruppen.

Gegenstand der Erfindung ist auch die Verwendung der oben genannten wässrigen Zusammensetzung, um auf Polymerfolien eine Sauerstoffbarriere zu erzeugen oder zu verstärken.

Die erfindungsgemäß hergestellte Beschichtung weist Sauerstoffbarriereeigenschaften auf. Die Barriereeigenschaften können mit dem in den Beispielen beschriebenem Permeabilitätstest gemessen werden. Der Begriff Sauerstoffbarriereeigenschaft bedeutet eine gegenüber unbeschichtetem Substrat verringerte Transmission bzw. Permeabilität gegenüber Sauerstoff. Vorzugsweise beträgt die Sauerstoffpermeabilität für erfindungsgemäß beschichtete Polymerfolien weniger als 30%, insbesondere weniger als 20% oder weniger als 10%, z.B. zwischen 1% und 3% des Wertes der unbeschichteten Polymerfolie (gemessen bei 23°C und 0% relativer Luftfeuchtigkeit).

Die erfindungsgemäß einzusetzende wässrige Zusammensetzung enthält ein Polymerisat A), welches zu 10 bis 80 Gew.-%, bevorzugt 10 bis 50 Gew.-%, besonders bevorzugt 15 bis 40 Gew.-% aus einem ethylenisch ungesättigten Säureanhydrid oder einer ethylenisch ungesättigten Dicarbonsäure, deren Carbonsäuregruppen eine Anhydridgruppe bilden können, aufgebaut ist (im folgenden Monomere a) genannt). Als Säureanhydride sind Dicarbonsäureanhydride bevorzugt. Geeignete ethylenisch ungesättigte Dicarbonsäuren sind im Allgemeinen solche mit Carbonsäuregruppen an benachbarten Kohlenstoffatomen. Die Carbonsäuregruppen können auch in Form ihrer Salze vorliegen. Als Monomere a) werden bevorzugt Maleinsäure, Maleinsäureanhydrid, Itaconsäure, 1,2,3,6-Tetrahydrophthalsäure, 1,2,3,6-Tetrahydrophthalsäureanhydrid, deren Alkali- und Ammoniumsalze oder Mischungen daraus. Besonders bevorzugt sind Maleinsäure und Maleinsäureanhydrid.

Neben Monomeren a) kann das Polymerisat noch Monomere b) enthalten. Als Monomere b) können beispielsweise eingesetzt werden: monoethylenisch ungesättigte C3- bis C10-Monocarbonsäuren, (Monomere b1), wie z. B. Acrylsäure, Methacrylsäure, Ethylacrylsäure, Allylessigsäure, Crotonsäure, Vinylessigsäure, Maleinsäurehalbester wie Maleinsäuremonomethylester, deren Mischungen bzw. deren Alkali- und Ammoniumsalze. Lineare 1-Olefine, verzweigtkettige 1-Olefine oder cyclische Olefine (Monomere b2), wie z. B. Ethen, Propen, Buten, Isobuten, Penten, Cyclopenten, Hexen, Cyclohexen, Octen, 2,4,4-Trimethyl-1-penten gegebenenfalls in Mischung mit 2,4,4-Trimethyl-2-penten, C8-C10-Olefin, 1-Dodecen, C12-C14-Olefin, Octadecen, 1-Eicosen (C20), C20-C24-Olefin; metallocenkatalytisch hergestellte Oligoolefine mit endständiger Doppelbindung, wie z. B. Oligopropen, Oligohexen und Oligooctadecen; durch kationische Polymerisation hergestellte Olefine mit hohem alpha-Olefin-Anteil, wie z. B. Polyisobuten. Vinyl- und Allylalkylether mit 1 bis 40 C-Atomen im Alkylrest, wobei der Alkylrest noch weitere Substituenten wie eine Hydroxylgruppe, eine Amino- oder Dialkylaminogruppe oder eine bzw. mehrere Alkoxylatgruppen tragen kann (Monomere b3), wie z. B. Methylvinylether, Ethylvinylether, Propylvinylether, Isobutylvinylether, 2-Ethylhexylvinylether, Vinylcyclohexylether, Vinyl-4-hydroxybutylether, Decylvinylether, Dodecylvinylether, Octadecylvinylether, 2-(Diethylamino)ethylvinylether, 2-(Di-n- butyl-amino)ethylvinylether, Methyldiglykolvinylether sowie die entsprechenden Allylether bzw. deren Mischungen. Acrylamide und alkylsubstituierte Acrylamide (Monomere b4), wie z. B. Acrylamid, Methacrylamid, N-tert.-Butylacrylamid, N-Methyl(meth)-acrylamid. Sulfogruppenhaltige Monomere (Monomere b5), wie z. B. Allylsulfonsäure, Methallylsulfonsäure, Styrolsulfonat, Vinylsulfonsäure, Allyloxybenzolsulfonsäure, 2-Acrylamido-2-methylpropansulfonsäure, deren entsprechende Alkali- oder Ammoniumsalze bzw. deren Mischungen.C1- bis C8-Alkylester oder C1- bis C4-Hydroxyalkylester der Acrylsäure, Methacrylsäure oder Maleinsäure oder Ester von mit 2 bis 50 Mol Ethylenoxid, Propylenoxid, Butylenoxid oder Mischungen davon alkoxylierten C1- bis C18-Alkoholen mit Acrylsäure, Methacrylsäure oder Maleinsäure (Monomere b6), wie z. B. Methyl(meth)acrylat, Ethyl(meth)acrylat, Propyl-(meth)acrylat, Isopropyl(meth)acrylat, Butyl(meth)acrylat, Hexyl(meth)acrylat, 2-Ethylhexyl-(meth)acrylat, Hydroxyethyl(meth)acrylat, Hydroxypropyl(meth)acrylat, Butandiol-1,4-monoacrylat, Maleinsäuredibutylester, Ethyldiglykolacrylat, Methylpolyglykolacrylat (11 EO), (Meth)-acrylsäureester von mit 3,5,7,10 oder 30 Mol Ethylenoxid umgesetztem C13/C15-Oxoalkohol bzw. deren Mischungen. Alkylaminoalkyl(meth)acrylate oder Alkylaminoalkyl(meth)acrylamide oder deren Quaternisierungsprodukte (Monomere b7), wie z. B. 2-(N,N-Dimethylamino)ethyl-(meth)acrylat, 3-(N,N-Dimethylamino)propyl(meth)acrylat, 2-(N,N,N-Trimethylammonium)ethyl(meth)acrylat-chlorid, 2-Dimethylaminoethyl(meth)acrylamid, 3-Dimethylaminopropyl(meth)-acrylamid, 3-Trimethylammoniumpropyl(meth)acrylamid-chlorid. Vinyl- und Allylester von C1-bis C30-Monocarbonsäuren (Monomere b8), wie z. B. Vinylformiat, Vinylacetat, Vinylpropionat, Vinylbutyrat, Vinylvalerat, Vinyl-2-ethylhexanoat, Vinylnonoat, Vinyldecanoat, Vinylpivalat, Vinylpalmitat, Vinylstearat, Vinyllaurat. Als weitere Monomere b9 seien noch genannt: N-Vinylformamid, N-Vinyl-N-methylformamid, Styrol, [alpha]-Methylstyrol, 3-Methylstyrol, Butadien, N-Vinylpyrrolidon, N-Vinylimidazol, 1-Vinyl-2-methylimidazol, 1-Vinyl-2-methyl-imidazolin, N- Vinylcaprolactam, Acrylnitril, Methacrylnitril, Allylalkohol, 2-Vinylpyridin, 4-Vinylpyridin, Diallyldimethylammoniumchlorid, Vinylidenchlorid, Vinylchlorid, Acrolein, Methacrolein und Vinylcarbazol bzw. Mischungen davon.

Das Polymerisat kann neben Monomeren a) noch 20 bis 90 Gew.-% Monomere b enthalten. Bevorzugt enthält das Polymerisat neben Monomeren a) noch Monomere b in Mengen von 50 bis 90, besonders bevorzugt von 60 bis 85 Gew.-%. Bevorzugte Monomere b sind Acrylsäure, Methacrylsäure, Ethen, Propen, Buten, Isobuten, Cyclopenten, Methylvinylether, Ethylvinylether, Acrylamid, 2-Acrylamido-2-methylpropansulfonsäure, Vinylacetat, Styrol, Butadien, Acrylnitril bzw. Mischungen davon. Besonders bevorzugt sind Acrylsäure, Methacrylsäure, Ethen, Acrylamid, Styrol und Acrylnitril bzw. Mischungen davon. Ganz besonders bevorzugt sind Acrylsäure, Methacrylsäure und Acrylamid bzw. Mischungen davon.

In einer Ausführungsform der Erfindung ist das Polymerisat zu 10 bis 80 Gew.-% aus Maleinsäure oder Maleinsäureanhydrid aufgebaut. In einer Ausführungsform der Erfindung ist das Polymerisat A zu 20 bis 40 Gew.-% aus Maleinsäure oder Maleinsäureanhydrid und zu 60 bis 80 Gew.-% aus Acrylsäure und/oder Methacrylsäure aufgebaut und es werden zur Vernetzung 20 bis 40 Gew.-Teile Alkanolamin B auf 100 Gew.-Teile Polymerisat A eingesetzt.

Die Polymerisate können nach üblichen Polymerisationsverfahren hergestellt werden, z. B. durch Substanz-, Emulsions-, Suspensions-, Dispersions-, Fällungs- und Lösungspolymerisation. Geeignete Polymerisationsverfahren sind in der WO 97/31036 beschrieben. Bei den genannten Polymerisationsverfahren wird bevorzugt unter Ausschluss von Sauerstoff gearbeitet, vorzugsweise in einem Stickstoffstrom. Für alle Polymerisationsmethoden werden die üblichen Apparaturen verwendet, z. B. Rührkessel, Rührkesselkaskaden, Autoklaven, Rohrreaktoren und Kneter. Bevorzugt wird nach der Methode der Lösungs-, Emulsions-, Fällungs- oder Suspensionspolymerisation gearbeitet. Besonders bevorzugt sind die Methoden der Lösungs- und Emulsionspolymerisation. Die Polymerisation kann in Lösungs- oder Verdünnungsmitteln, wie z. B. Toluol, o-Xylol, p-Xylol, Cumol, Chlorbenzol, Ethylbenzol, technischen Mischungen von Alkylaromaten, Cyclohexan, technischen Aliphatenmischungen, Aceton, Cyclohexanon, Tetrahydrofuran, Dioxan, Glykolen und Glykolderivaten, Polyalkylenglykolen und deren Derivate, Diethylether, tert.-Butylmethylether, Essigsäuremethylester, Isopropanol, Ethanol, Wasser oder Mischungen wie z. B. Isopropanol/Wasser-Mischungen ausgeführt werden. Vorzugsweise wird als Lösungs- oder Verdünnungsmittel Wasser gegebenenfalls mit Anteilen bis zu 60 Gew.-% an Alkoholen oder Glykolen verwendet. Besonders bevorzugt wird Wasser eingesetzt. Die Polymerisation kann bei Temperaturen von 20 bis 300, vorzugsweise von 60 bis 200 °C durchgeführt werden. Je nach Wahl der Polymerisationsbedingungen lassen sich gewichtsmittlere Molekulargewichte z. B. von 800 bis 5.000.000, insbesondere von 1.000 bis 1.000.000 einstellen. Bevorzugt liegen die gewichtsmittleren Molekulargewichte Mw über 5.000. Besonders bevorzugt sind gewichtsmittlere Molekulargewichte von 5.000 bis 500.000 oder von 10.000 bis 200.000. Mw wird bestimmt durch Gelpermeationschromatographie.

Die Polymerisation wird vorzugsweise in Gegenwart von Radikale bildenden Verbindungen (Initiatoren) durchgeführt. Man benötigt von diesen Verbindungen bis zu 30, vorzugsweise 0,05 bis 15, besonders bevorzugt 0,2 bis 8 Gew.-%, bezogen auf die bei der Polymerisation eingesetzten Monomeren. Bei mehrkomponentigen Initiatorsystemen (z. B. Redox-Initiatorsystemen) beziehen sich die vorstehenden Gewichtsangaben auf die Summe der Komponenten. Geeignete Polymerisationsinitiatoren sind beispielsweise Peroxide, Hydroperoxide, Peroxidisulfate, Percarbonate, Peroxiester, Wasserstoffperoxid und Azoverbindungen. Beispiele für Initiatoren, die wasserlöslich oder auch wasserunlöslich sein können, sind Wasserstoffperoxid, Dibenzoylperoxid, Dicyclohexylperoxidicarbonat, Dilauroylperoxid, Methylethylketonperoxid, Di-tert.- Butylperoxid, Acetylacetonperoxid, tert.-Butylhydroperoxid, Cumolhydroperoxid, tert.-Butylperneodecanoat, tert.-Amylperpivalat, tert.-Butylperpivalat, tert.-Butylperneohexanoat, tert.- Butylper-2-ethylhexanoat, tert.-Butyl-perbenzoat, Lithium-, Natrium-, Kalium- und Ammoniumperoxidisulfat, Azodiisobutyronitril, 2,2'-Azobis(2-amidinopropan)dihydrochlorid, 2-(Carbamoylazo)isobutyronitril und 4,4-Azobis(4-cyanovaleriansäure). Die Initiatoren können allein oder in Mischung untereinander angewendet werden, z. B. Mischungen aus Wasserstoffperoxid und Natriumperoxidisulfat. Für die Polymerisation in wässrigem Medium werden bevorzugt wasserlösliche Initiatoren eingesetzt. Auch die bekannten Redox-Initiatorsysteme können als Polymerisationsinitiatoren verwendet werden. Solche Redox-Initiatorsysteme enthalten mindestens eine peroxidhaltige Verbindung in Kombination mit einem Redox-Coinitiator z. B. reduzierend wirkenden Schwefelverbindungen, beispielsweise Bisulfite, Sulfite, Thiosulfate, Dithionite und Tetrathionate von Alkalimetallen und Ammoniumverbindungen. So kann man Kombinationen von Peroxodisulfaten mit Alkalimetall- oder Ammoniumhydrogensulfiten einsetzen, z. B. Ammoniumperoxidisulfat und Ammoniumdisulfit. Die Menge der peroxidhaltigen Verbindung zum Redox-Coinitiator beträgt 30 : 1 bis 0,05 : 1.

Um Polymerisate mit niedrigem mittleren Molekulargewicht her zustellen, ist es oft zweckmäßig, die Copolymerisation in Gegenwart von Reglern durchzuführen. Hierfür können übliche Regler verwendet werden, wie beispielsweise organische SH-Gruppen enthaltende Verbindungen, wie 2-Mercaptoethanol, 2-Mercaptopropanol, Mercaptoessigsäure, tert.-Butylmercaptan, n-Octylmercaptan, n- Dodecylmercaptan und tert.-Dodecylmercaptan, C1- bis C4-Aldehyde, wie Formaldehyd, Acetaldehyd, Propionaldehyd, Hydroxylammoniumsalze wie Hydroxylammoniumsulfat, Ameisensäure, Natriumbisulfit oder Isopropanol. Die Polymerisationsregler werden im allgemeinen in Mengen von 0,1 bis 10 Gew.-%, bezogen auf die Monomeren eingesetzt. Auch durch die Wahl des geeigneten Lösungsmittels kann auf das mittlere Molekulargewicht Einfluss genommen werden. So führt die Polymerisation in Gegenwart von Verdünnungsmitteln mit benzylischen H-Atomen zu einer Verringerung des mittleren Molekulargewichtes durch Kettenübertragung.

Um höhermolekulare Copolymerisate herzustellen, ist es oft zweckmäßig, bei der Polymerisation in Gegenwart von Vemetzern zu arbeiten. Solche Vernetzer sind Verbindungen mit zwei oder mehreren ethylenisch ungesättigten Gruppen, wie beispielsweise Diacrylate oder Dimethacrylate von mindestens zweiwertigen gesättigten Alkoholen, wie z. B. Ethylenglykoldiacrylat, Ethylenglykoldimethacrylat, 1,2-Propylenglykoldiacrylat, 1,2-Propylenglykoldimethacrylat, Butandiol-1,4-diacrylat, Butandiol-1,4-dimethacrylat, Hexandioldiacrylat, Hexandioldimethacrylat, Neopentylglykoldiacrylat, Neopentylglykoldimethacrylat, 3-Methylpentandioldiacrylat und 3-Methylpentandioldimethacrylat. Auch die Acrylsäure- und Methacrylsäureester von Alkoholen mit mehr als 2 OH-Gruppen können als Vernetzer eingesetzt werden, z. B. Trimethylolpropantriacrylat oder Trimethylolpropantrimethacrylat. Eine weitere Klasse von Vernetzern sind Diacrylate oder Dimethacrylate von Polyethylenglykolen oder Polypropylenglykolen mit Molekulargewichten von jeweils 200 bis 9 000. Polyethylenglykole bzw. Polypropylenglykole, die für die Herstellung der Diacrylate oder Dimethacrylate verwendet werden, haben vorzugsweise ein Molekulargewicht von jeweils 400 bis 2 000. Außer den Homopolymerisaten des Ethylenoxids bzw. Propylenoxids können auch Blockcopolymerisate aus Ethylenoxid und Propylenoxid oder Copolymerisate aus Ethylenoxid und Propylenoxid eingesetzt werden, die die Ethylenoxid- und Propylenoxid-Einheiten statistisch verteilt enthalten. Auch die Oligomeren des Ethylenoxids bzw. Propylenoxids sind für die Herstellung der Vernetzer geeignet, z. B. Diethylenglykoldiacrylat, Diethylenglykoldimethacrylat, Triethylenglykoldiacrylat, Triethylenglykoldimethacrylat, Tetraethylenglykoldiacrylat und/oder Tetraethylenglykoldimethacrylat. Als Vernetzer eignen sich weiterhin Vinylacrylat, Vinylmethacrylat, Vinylitaconat, Adipinsäuredivinylester, Butandioldivinylether, Trimethylolpropantrivinylether, Allylacrylat, Allylmethacrylat, Pentaerithrittriallylether, Triallylsaccharose, Pentaallylsaccharose, Pentaallylsucrose, Methylenbis(meth)acrylamid, Divinylethylenharnstoff, Divinylpropylenharnstoff, Divinylbenzol, Divinyldioxan, Triallylcyanurat, Tetraallylsilan, Tetravinylsilan und Bis- oder Polyacrylsiloxane (z. B. Tegomere der Th. Goldschmidt AG). Die Vernetzer werden vorzugsweise in Mengen von 10 ppm bis 5 Gew.-%, bezogen auf die zu polymerisierenden Monomere, eingesetzt.

Wird nach der Methode der Emulsions-, Fällungs-, Suspensions- oder Dispersionspolymerisation gearbeitet, so kann es vorteilhaft sein, die Polymertröpfchen bzw. Polymerteilchen durch grenzflächenaktive Hilfsstoffe zu stabilisieren. Typischerweise verwendet man hierzu Emulgatoren oder Schutzkolloide. Es kommen anionische, nichtionische, kationische und amphotere Emulgatoren in Betracht. Anionische Emulgatoren sind beispielsweise Alkylbenzolsulfonsäuren, sulfonierte Fettsäuren, Sulfosuccinate, Fettalkoholsulfate, Alkylphenolsulfate und Fettalkoholethersulfate. Als nichtionische Emulgatoren können beispielsweise Alkylphenolethoxylate, Primäralkoholethoxilate, Fettsäureethoxilate, Alkanolamidethoxilate, Fettaminethoxilate, EO/PO-Blockcopolymere und Alkylpolyglucoside verwendet werden. Als kationische bzw. amphotere Emulgatoren werden beispielsweise verwendet: Quaternisierte Aminalkoxylate, Alkylbetaine, Alkylamidobetaine und Sulfobetaine. Typische Schutzkolloide sind beispielsweise Cellulosederivate, Polyethylenglykol, Polypropylenglykol, Copolymerisate aus Ethylenglykol und Propylenglykol, Polyvinylacetat, Polyvinylalkohol, Polyvinylether, Stärke und Stärkederivate, Dextran, Polyvinylpyrrolidon, Polyvinylpyridin, Polyethylenimin, Polyvinylimidazol, Polyvinylsuccinimid, Polyvinyl-2-methylsuccinimid, Polyvinyl-1,3-oxazolidon-2, Polyvinyl-2-methylimidazolin und Maleinsäure bzw. Maleinsäureanhydrid enthaltende Copolymerisate, wie sie z. B. in DE 25 01 123 beschrieben sind. Die Emulgatoren oder Schutzkolloide werden üblicherweise in Konzentrationen von 0,05 bis 20 Gew.-%, bezogen auf die Monomere, eingesetzt.

Wird in wässriger Lösung oder Verdünnung polymerisiert, so können die Monomere vor oder während der Polymerisation ganz oder teilweise durch Basen neutralisiert werden. Als Basen kommen beispielsweise Alkali- oder Erdalkaliverbindungen wie Natriumhydroxid, Kaliumhydroxid, Calciumhydroxid, Magnesiumoxid, Natriumcarbonat; Ammoniak; primäre, sekundäre und tertiäre Amine, wie Ethylamin, Propylamin, Monoisopropylamin, Monobutylamin, Hexylamin, Ethanolamin, Dimethylamin, Diethylamin, Di-n-propylamin, Tributylamin, Triethanolamin, Dimethoxyethylamin, 2-Ethoxyethylamin, 3-Ethoxypropylamin, Dimethylethanolamin, Diisopropanolamin oder Morpholin in Frage. Weiterhin können auch mehrbasische Amine zur Neutralisation eingesetzt werden, wie z. B. Ethylendiamin, 2-Diethylaminethylamin, 2,3-Diaminopropan, 1,2-Propylendiamin, Dimethylaminopropylamin, Neopentandiamin, Hexamethylendiamin, 4,9-Dioxadodecan-1,12-diamin, Polyethylenimin oder Polyvinylamin. Vorzugsweise werden zur partiellen oder vollständigen Neutralisation der ethylenische ungesättigten Carbonsäuren vor oder während der Polymerisation Ammoniak, Triethanolamin und Diethanolamin eingesetzt. Besonders bevorzugt werden die ethylenisch ungesättigten Carbonsäuren vor und während der Polymerisation nicht neutralisiert. Bevorzugt wird auch nach der Polymerisation kein Neutralisierungsmittel, abgesehen vom Alkanolamin B), zugesetzt. Die Durchführung der Polymerisation kann nach einer Vielzahl von Varianten kontinuierlich oder diskontinuierlich durchgeführt werden. Üblicherweise legt man einen Teil der Monomeren gegebenenfalls in einem geeigneten Verdünnungsmittel oder Lösungsmittel und gegebenenfalls in Anwesenheit eines Emulgators, eines Schutzkolloids oder weiterer Hilfsstoffe vor, inertisiert, und erhöht die Temperatur bis zum Erreichen der gewünschten Polymerisationstemperatur. Es kann allerdings auch lediglich ein geeignetes Verdünnungsmittel vorgelegt sein. Innerhalb eines definierten Zeitraumes werden der Radikalinitiator, weitere Monomere und sonstige Hilfsstoffe, wie z. B. Regler oder Vernetzer jeweils gegebenenfalls in einem Verdünnungsmittel zudosiert. Die Zulaufzeiten können unterschiedlich lang gewählt werden. Beispielsweise kann man für den Initiatorzulauf eine längere Zulaufzeit wählen als für den Monomerzulauf. Wird das Polymerisat nach dem Verfahren einer Lösungspolymerisation in Wasser gewonnen, so ist üblicherweise keine Abtrennung des Lösungsmittels notwendig. Besteht dennoch der Wunsch, das Polymerisat zu isolieren, kann z. B. eine Sprühtrocknung durchgeführt werden. Wird das Polymerisat nach der Methode einer Lösungs-, Fällungs- oder Suspensionspolymerisation in einem wasserdampfflüchtigen Lösungsmittel oder Lösungsmittelgemisch hergestellt, so kann das Lösungsmittel durch Einleiten von Wasserdampf abgetrennt werden, um so zu einer wässrigen Lösung oder Dispersion zu gelangen. Das Polymerisat kann von dem organischen Verdünnungsmittel auch durch einen Trocknungsprozess abgetrennt werden.

Bevorzugt liegen die Polymerisate A) in Form einer wässrigen Dispersion oder Lösung mit Feststoffgehalten von vorzugsweise 10 bis 80 Gew.-%, insbesondere 40 bis 65 Gew.-% vor. Polymerisat A) kann auch durch Pfropfung von Maleinsäure bzw. Maleinsäureanhydrid bzw. einer Maleinsäure oder Maleinsäureanhydrid enthaltenden Monomermischung auf eine Pfropfgrundlage erhalten werden. Geeignete Pfropfgrundlagen sind z.B. Monosaccharide, Oligosaccharide, modifizierte Polysaccharide und Alkylpolyglykolether. Solche Pfropfpolymerisate sind beispielsweise in DE 40 03 172 und EP 116 930 beschrieben.

Als Komponente B) werden Alkanolamine mit mindestens zwei OH- Gruppen eingesetzt. Bevorzugt sind Alkanolamine der Formel

NR¹R²R³ (I)

in der R¹ für ein H-Atom, eine C1-C10-Alkylgruppe oder eine C1-C10-Hydroxyalkylgruppe steht und R² und R³ für eine C1-C10-Hydroxyalkylgruppe stehen. Besonders bevorzugt stehen R² und R³ unabhängig voneinander für eine C2-C5-Hydroxyalkylgruppe und R¹ für ein H-Atom, eine C1-C5-Alkylgruppe oder eine C2-C5-Hydroxyalkylgruppe. Als Verbindungen der Formel I seien z.B. Diethanolamin, Triethanolamin, Diisopropanolamin, Triisopropanolamin, Methyldiethanolamin, Butyldiethanolamin und Methyldiisopropanolamin genannt. Besonders bevorzugt ist Triethanolamin.

Zur Herstellung der erfindungsgemäß einzusetzenden wässrigen Zusammensetzung werden das Polymerisat A) und das Alkanolamin B) bevorzugt in einem solchen Verhältnis zueinander eingesetzt, dass das Molverhältnis von Carboxylgruppen der Komponente A) und der Hydroxylgruppen der Komponente B) 20 : 1 bis 1 : 1, bevorzugt 8 : 1 bis 5 : 1 und besonders bevorzugt 5 : 1 bis 1,7 : 1 beträgt (die Anhydridgruppen werden hierbei als 2 Carboxylgruppen berechnet). Die Herstellung der erfindungsgemäß einzusetzenden wässrigen Zusammensetzung erfolgt z. B. einfach durch Zugabe des Alkanolamins zur wässrigen Dispersion oder Lösung der Polymerisate A).

Die erfindungsgemäß einzusetzenden wässrigen Zusammensetzungen enthalten vorzugsweise weniger als 1,0 Gew.-%, besonders bevorzugt weniger als 0,5 Gew.-% und ganz besonders bevorzugt weniger als 0,3 Gew.-%, insbesondere weniger als 0,1 Gew.-%, bezogen auf die Summe aus A) + B) eines Phosphor enthaltenden Reaktionsbeschleunigers. Phosphor enthaltende Reaktionsbeschleuniger sind in US 651 088 und US 583 086 genannt. Es handelt sich dabei insbesondere um Alkalimetallhypophosphite, -phosphite, -polyphosphate, -dihydrogenphosphate, Polyphosphorsäure, Hypophosphorsäure, Phosphorsäure, Alkylphosphinsäure oder Oligomere bzw. Polymere dieser Salze und Säuren. Die erfindungsgemäß einzusetzenden wässrigen Zusammensetzungen enthalten vorzugsweise keine Phosphor enthaltenden Reaktionsbeschleuniger bzw. keine zur Reaktionsbeschleunigung wirksame Mengen einer Phosphor enthaltenden Verbindung. Die erfindungsgemäß einzusetzenden wässrigen Zusammensetzungen können einen Veresterungskatalysator enthalten, wie z. B. Schwefelsäure oder p-Toluolsulfonsäure.

Die erfindungsgemäß einzusetzenden wässrigen Zusammensetzungen können das Polymerisat A) und das Alkanolamin B) als einzige Bestandteile in Wasser enthalten. Die wässrigen Zusammensetzungen können jedoch auch noch weitere für die jeweilig beabsichtigte Verwendung geeignete Zusatzstoffe enthalten. In Betracht kommen z. B. Benetzungshilfsmittel, Farbstoffe, Pigmente, Biozide, Plastifizierungsmittel, Verdickungsmittel zur Einstellung der Rheologie, Haftverbesserer, Reduktionsmittel und Umesterungskatalysatoren.

In einer Ausführungsform der Erfindung enthält die erfindungsgemäß einzusetzende wässrige Zusammensetzung plättchenförmige Pigmente in einer Menge von vorzugsweise 2 bis 40 Gew.-%. Beispiele für plättchenförmige Pigmente sind Schichtsilikate, insbesondere Talkum, Ton oder Mica (Glimmer). Bevorzugt ist Talkum. Bevorzugte Formfaktoren (Verhältnis Länge zu Dicke) sind größer 10.

Gegenstand der Erfindung ist auch ein Verfahren zur Erzeugung oder Verstärkung eine Sauerstoffbarrierewirkung auf einem Trägersubstrat. Bei den Trägersubstraten handelt es sich um Polymerfolien, wobei das Trägersubstrat mittelbar oder unmittelbar beschichtet wird mit einer oben näher beschriebenen wässrigen Zusammensetzung. Die Polymerfolie wird nach der Beschichtung mit der wässrigen Zusammensetzung getrocknet und auf mindestens 100 °C, vorzugsweise auf mindestens 130 °C, z.B. auf 140 bis 180 °C erwärmt, um die Vernetzungsreaktion zu starten. Die Erwärmung erfolgt über einen Zeitraum von vorzugsweise 3 Sekunden bis 60 Minuten, insbesondere 3 Sekunden bis 10 Minuten.

Nach Vernetzung weist die erfindungsgemäße Polymerfolie eine Beschichtung auf, bei der das Polymerisat vernetzt ist über Esterbindungen zwischen Säuregruppen des Polymerisats A und Hydroxylgruppen des Alkanolamins B.

Die erfindungsgemäß einzusetzenden wässrigen Zusammensetzungen haben nach Trocknung (bei 50 °C, 72 Stunden) zu einem Film der Dicke 0,3 bis 1 mm und anschließender 15-minütiger Härtung bei 130 °C an der Luft vorzugsweise einen Gelgehalt über 50 Gew.-%, besonders bevorzugt über 60 Gew.-%, ganz besonders bevorzugt über 70 Gew.-% und insbesondere über 75 Gew.-%. Die Bestimmung des Gelgehaltes erfolgt dabei derart, dass nach Abschluss der Härtung die gehärteten Filme 48 Stunden in Wasser bei 23 °C gelagert werden. Lösliche Anteile verbleiben dabei im Wasser. Der Film wird dann bei 50 °C bis zur Gewichtskonstanz getrocknet und gewogen. Das Gewicht entspricht dem Gelgehalt, der Gelgehalt wird berechnet in Gew.-%, bezogen auf das Gewicht vor Abtrennen der löslichen Anteile. Gewichtskonstanz ist erreicht, wenn die Gewichtsabnahme über einen Zeitraum von 3 Stunden weniger als 0,5 Gew.-% beträgt.

Als Trägermaterial geeignete Polymerfolien sind Folien beispielsweise Folien aus Polyester, wie Polyethylenterephthalat, Folien aus Polyolefinen, Polyamid, Polystyrol oder Polyvinylchlorid. Bevorzugte Polymerfolien sind Folien aus Polyethylenterephtalat, orientiertem Polypropylen, Polyethylen, wobei das Polyethylen sowohl nach dem Hochdruck- als auch nach dem Niederdruck-Polymerisationsverfahren von Ethylen hergestellt worden sein kann, oder biologisch abbaubaren aliphatisch-aromatischen Copolyestern. Besonders bevorzugt sind Folien aus Polyethylenterephtalat. Biologisch abbaubare Folien sind z.B. Folien aus biologisch abbaubaren aliphatisch-aromatischen Copolyestern und/oder Polymilchsäure, beispielsweise Ecoflex®-oder Ecovio®-Folien. Geeignete Copolyester sind z.B. gebildet aus Alkandiolen, insbesondere C2- bis C8-Alkandiolen wie z.B. 1,4-Butandiol, aus aliphatischen Dicarbonsäuren, insbesondere C2- bis C8-Dicarbonsäuren wie z.B. Adipinsäure und aus aromatischen Dicarbonsäuren wie z.B. Terephthalsäure.

Die Dicke der Trägerfolien liegt im allgemeinen in dem Bereich von 10 bis 200 µm, bei Folien aus Polyamid bei 30 bis 50 µm, bei Folien aus Polyethylenterephthalat bei 10 bis 40 µm, bei Folien aus Polyvinylchlorid bei ca. 100 µm und bei Folien aus Polystyrol bei etwa 30-75 µm.

Die Anwendung kann beispielsweise auf Beschichtungsmaschinen in der Weise vorgenommen werden, dass man auf eine Trägerfolie aus einem Kunststoff die Beschichtungszusammensetzung aufträgt. Sofern bahnförmige Materialien verwendet werden, kann die wässrige Zusammensetzung aus einer Wanne über eine Auftragswalze aufgetragen und mit Hilfe einer Luftbürste egalisiert werden. Bevorzugte Auftrageverfahren für die Folienbeschichtung sind Rakel, Drahtrakel, Luftbürste, Gegenlaufwalzenauftragsverfahren, Gegenlaufgravurstreichen, Gießkopf, Vorhangbeschichtung oder Düse.

Die durch die Erwärmung induzierte Vernetzung kann unmittelbar nach der Beschichtung erfolgen oder aber zu einem späteren Zeitpunkt, beispielsweise im aufgewickelten Zustand nachdem bahnförmige Materialien beschichtet, getrocknet und aufgewickelt wurden.

Eine zusätzliche Vernetzung kann dadurch erfolgen, dass radikalbildende UV-Initiatoren in das Polymerisat einpolymerisiert oder als Additiv der wässrigen Zusammensetzung zugesetzt werden, wobei die Polymerfolie nach der Beschichtung mit UV-Licht bestrahlt wird.

Um die Haftung auf einer Folie noch zu verbessern, kann die Trägerfolie zuvor einer CoronaBehandlung unterworfen werden und/oder mit einem Primer beschichtet sein. Die auf die Polymerfolien aufgetragenen Mengen betragen z.B. vorzugsweise 0,25 bis 10 g (Polymer, fest) pro m², vorzugsweise 0,5 bis 7 g/m². Nach dem Aufbringen der wässrigen Zusammensetzung auf das Trägermaterial wird das Lösungsmittel verdampft. Hierfür kann man beispielsweise bei kontinuierlichem Arbeiten das Material durch einen Trocknerkanal führen, der mit einer Infrarot-Bestrahlungsvorrichtung ausgestattet sein kann. Danach wird das beschichtete und getrocknete Material über eine Abkühlwalze geführt und schließlich aufgewickelt. Die Dicke der getrockneten Beschichtung beträgt vorzugsweise mindestens 0,5 µm, z.B. 0,5 bis 50 µm, besonders bevorzugt 0,5 bis 20 µm.

Die beschichteten Polymerfolien zeigen eine hervorragende Barrierewirkung gegen Sauerstoff, insbesondere auch bei höherer relativer Luftfeuchtigkeit von z.B. größer oder gleich 80% oder größer oder gleich 85%. Die beschichteten Polymerfolien können als solche als Verpackung oder Teil einer Verpackung verwendet werden, vorzugsweise für die Verpackung von Lebensmitteln. Die Beschichtungen haben sehr gute mechanische Eigenschaften, und zeigen z.B. gutes Blockverhalten und zeigen im Wesentlichen keine Rissbildungen.

Um spezielle Oberflächen- oder Beschichtungseigenschaften der Verpackungsmittel, zu erhalten, beispielsweise eine gute Bedruckbarkeit, noch besseres Siegel- und Blockverhalten, gute Wasserbeständigkeit, kann es vorteilhaft sein, die beschichteten Substrate mit Deckschichten überzubeschichten, die diese gewünschten Eigenschaften zusätzlich verleihen. Die beschichteten Folien können erneut nach einem oben angeführten Verfahren überbeschichtet oder in einem kontinuierlichen Prozess ohne zwischenzeitliches Auf- und Abwickeln der Folie mehrfach beschichtet werden. Die Sauerstoffbarriereschicht befindet sich dadurch im Inneren des Systems, die Oberflächeneigenschaften werden dann von der Deckschicht bestimmt. Gegenstand der Erfindung sind auch beschichtete Polymerfolien, wobei die Polymerfolien zusätzlich zu der erfindungsgemäßen Barriereschicht mit mindestens einer Klebstoff- oder Siegelschicht beschichtet sind. Weiterhin kann mit der beschichteten Folie ein Laminat bestehend aus mehreren Folien hergestellt werden. Auch hierbei befindet sich die Sauerstoffbarriereschichtvorzugsweise im Inneren des Systems.

### Beispiele

Die wässrigen Beschichtungszusammensetzungen können hergestellt werden wie in der WO 97/31036 beschrieben.

### Messung der Sauerstoffbarrierewirkung:

Die Sauerstofftransmission bzw. die Sauerstoffpermeabilität wurde an Beschichtungen auf Polymerfolien bei der jeweils angegebenen relativen Luftfeuchte bestimmt. Dabei wird zunächst die Sauerstoffdurchlässigkeit (Transmission) gemessen, die anschließend auf eine Schichtdicke von 1 µm umgerechnet wird und als Sauerstoffpermeabilität mit der Einheit (cm³ x 1 µm) / (m² x d x bar) angegeben wird, wobei d die Zeit in Tagen ist. Die Bestimmung erfolgt in Anlehnung an ASTM-D 3985.

### Beispiel B1 (Vergleich, ohne Alkanolamin)

Polymerfolie: Polyethylenterephtalat mit einer Dicke von 36 µm

### Wässrige Beschichtungszusammensetzung:

Polymerisat aus 75 Gew.-Teilen Acrylsäure und 25 Gew.-Teilen Maleinsäure
gewichtsmittleres Molekulargewicht: 80000 g/mol
Feststoffgehalt: 50 Gew.% in Wasser

### Beispiel B2

Polymerfolie: Polyethylenterephtalat mit einer Dicke von 36 µm

### Wässrige Beschichtungszusammensetzung:

Polymerisat aus 75 Gew.-Teilen Acrylsäure und 25 Gew.-Teilen Maleinsäure
gewichtsmittleres Molekulargewicht: 80000 g/mol
30 Gew.-Teile Triethanolamin auf 100 Gew.-Teile Polymerisat

### Feststoffgehalt: 50 Gew.% in Wasser

Die Polymerfolien wurden mit den wässrigen Beschichtungszusammensetzungen mit einer Schichtdicke (nach Trocknen) von 6 µm (Beispiel 1) bzw. 10 µm (Beispiel 2) beschichtet. Die Vernetzung erfolgte durch Erwärmen auf 160°C für 30 Minuten.

Die Sauerstoffbarrierewirkung wurde jeweils bei 0% und bei 85% relativer Luftfeuchte gemessen. Die Ergebnisse sind in Tabelle 1 zusammengefasst.

**Tabelle 1: Messergebnisse der Sauerstoffbarriere**

| | Vernetzer | Sauerstofftransmission bei 0% RH [cm³ / m² / d] | Sauerstofftransmission bei 85% RH [cm³ / m² / d] | Sauerstoffpermeabilität bei 0% RH [(cm³ x 1 µm) / (m² x d x bar)] | Sauerstoffpermeabilität bei 85 RH [(cm³ x 1 µm) / (m² x d x bar)] |
|---|---|---|---|---|---|
| B1 | - | 1,5 | 43,5 | 9,2 | Keine Barriere |
| B2 | Triethanolamin | 0,1 | 0,2 | 1,1 | 1,6 |

## Patentansprüche

1. Beschichtete Polymerfolie, herstellbar durch Beschichten einer Polymerfolie mit einer wässrigen Zusammensetzung, enthaltend
A) ein durch radikalische Polymerisation erhaltenes Polymerisat, welches zu 10 bis 80 Gew.-% aus mindestens einer Verbindung, ausgewählt aus ethylenisch ungesättigten Säureanhydriden und ethylenisch ungesättigten Dicarbonsäuren, deren Carbonsäuregruppen eine Anhydridgruppe bilden können, besteht und
B) mindestens ein Alkanolamin mit mindestens zwei Hydroxylgruppen.

2. Polymerfolie nach dem vorhergehenden Anspruch, wobei die beschichtete Polymerfolie nach der Beschichtung mit der wässrigen Zusammensetzung getrocknet und auf mindestens 100 °C erwärmt wird.

3. Polymerfolie nach einem der vorhergehenden Ansprüche, wobei die Polymerfolie eine Beschichtung aufweist, bei der das Polymerisat vernetzt ist über Esterbindungen zwischen Säuregruppen des Polymerisats A und Hydroxylgruppen des Alkanolamins B.

4. Polymerfolie nach einem der vorhergehenden Ansprüche, wobei das Polymerisat zu 10 bis 80 Gew.-% aus Maleinsäure oder Maleinsäureanhydrid aufgebaut ist.

5. Polymerfolie nach einem der vorhergehenden Ansprüche, wobei es sich bei dem Alkanolamin um eine Verbindung NR¹R²R³ handelt, in der R¹ für ein H-Atom, eine C1-C10-Alkylgruppe oder eine C1-C10-Hydroxyalkylgruppe steht und R² und R³ für eine C1-C10-Hydroxyalkylgruppe stehen.

6. Polymerfolie nach einem der vorhergehenden Ansprüche, wobei es sich bei dem Alkanolamin um Triethanolamin handelt.

7. Polymerfolie nach einem der vorhergehenden Ansprüche, wobei das Molverhältnis der Carboxylgruppen und Säureanhydridgruppen (eine Säureanhydridgruppe berechnet als zwei Carboxylgruppen) von A) zu den Hydroxylgruppen von B) 20 : 1 bis 1 : 1 beträgt.

8. Polymerfolie nach einem der vorhergehenden Ansprüche, wobei die wässrige Zusammensetzung nach Trocknung und 15-minütiger Härtung bei 130 °C einen Gelgehalt größer 50 Gew.-% hat.

9. Polymerfolie nach einem der vorhergehenden Ansprüche, wobei die Beschichtung eine Dicke von mindestens 0,5 µm aufweist.

10. Polymerfolie nach einem der vorhergehenden Ansprüche, wobei das Trägermaterial der Polymerfolie ausgewählt ist aus Polyethylenterephtalat, orientiertem Polypropylen, Polyethylen und biologisch abbaubaren aliphatisch-aromatischen Copolyestern.

11. Polymerfolie nach einem der vorhergehenden Ansprüche, wobei die Polymerfolie eine Verpackung oder ein Teil einer Verpackung ist.

12. Polymerfolie nach einem der vorhergehenden Ansprüche, wobei die Polymerfolie zusätzlich mit mindestens einer Klebstoff- oder Siegelschicht beschichtet ist.

13. Polymerfolie nach einem der vorhergehenden Ansprüche, wobei das Polymerisat A zu 20 bis 40 Gew.-% aus Maleinsäure oder Maleinsäureanhydrid und zu 60 bis 80 Gew.-% aus Acrylsäure und/oder Methacrylsäure aufgebaut ist und 20 bis 40 Gew.-Teile Alkanolamin B auf 100 Gew.-Teile Polymerisat A eingesetzt sind.

14. Verwendung einer wässrigen Zusammensetzung, enthaltend
A) ein durch radikalische Polymerisation erhaltenes Polymerisat, welches zu 10 bis 80 Gew.-% aus mindestens einer Verbindung, ausgewählt aus ethylenisch ungesättigten Säureanhydriden und ethylenisch ungesättigten Dicarbonsäuren, deren Carbonsäuregruppen eine Anhydridgruppe bilden können, besteht und
B) mindestens ein Alkanolamin mit mindestens zwei Hydroxylgruppen
um auf Polymerfolien eine Sauerstoffbarriere zu erzeugen oder zu verstärken.

15. Verfahren zur Erzeugung oder Verstärkung eine Sauerstoffbarrierewirkung auf einem Trägersubstrat, ausgewählt aus Polymerfolien, wobei das Trägersubstrat mittelbar oder unmittelbar beschichtet wird mit einer wässrigen Zusammensetzung, enthaltend
A) ein durch radikalische Polymerisation erhaltenes Polymerisat, welches zu 10 bis 80 Gew.-% aus mindestens einer Verbindung, ausgewählt aus ethylenisch ungesättigten Säureanhydriden und ethylenisch ungesättigten Dicarbonsäuren, deren Carbonsäuregruppen eine Anhydridgruppe bilden können, besteht und
B) mindestens ein Alkanolamin mit mindestens zwei Hydroxylgruppen,
wobei die beschichtete Polymerfolie nach der Beschichtung mit der wässrigen Zusammensetzung getrocknet und auf mindestens 130 °C erwärmt wird.

## Claims

1. A coated polymer foil which can be produced via coating of a polymer foil with an aqueous composition comprising
A) a polymer which is obtained via free-radical polymerization and which is composed of from 10 to 80% by weight of at least one compound selected from ethylenically unsaturated anhydrides and ethylenically unsaturated dicarboxylic acids, the carboxylic acid groups of which can form an anhydride group, and
B) at least one alkanolamine having at least two hydroxy groups.

2. The polymer foil according to the preceding claim, where, after the coating process, the coated polymer foil with the aqueous composition is dried and heated to at least 100°C.

3. The polymer foil according to any of the preceding claims, where the polymer foil has a coating in which the polymer has been crosslinked by way of ester bonds between acid groups of the polymer A and hydroxy groups of the alkanolamine B.

4. The polymer foil according to any of the preceding claims, where the polymer is composed of from 10 to 80% by weight of maleic acid or maleic anhydride.

5. The polymer foil according to any of the preceding claims, where the alkanolamine involves a compound NR¹R²R³ in which R¹ is an H atom, a C1-C10-alkyl group, or a C1-C10-hydroxyalkyl group, and R² and R³ are a C1-C10-hydroxyalkyl group.

6. The polymer foil according to any of the preceding claims, where the alkanolamine involves triethanolamine.

7. The polymer foil according to any of the preceding claims, where the molar ratio of the carboxy groups and anhydride groups (where an anhydride group is counted as two carboxy groups) of A) to the hydroxy groups of B) is from 20 : 1 to 1 : 1.

8. The polymer foil according to any of the preceding claims, where the gel content of the aqueous composition after drying and 15 minutes of curing at 130°C is greater than 50% by weight.

9. The polymer foil according to any of the preceding claims, where the thickness of the coating is at least 0.5 µm.

10. The polymer foil according to any of the preceding claims, where the backing material for the polymer film has been selected from polyethylene terephthalate, oriented polypropylene, polyethylene, and biodegradable aliphatic-aromatic copolyesters.

11. The polymer foil according to any of the preceding claims, where the polymer foil is packaging or a portion of packaging.

12. The polymer foil according to any of the preceding claims, where the polymer foil has also been coated with at least one adhesive layer or with at least one sealable layer.

13. The polymer foil according to any of the preceding claims, where the polymer A is composed of from 20 to 40% by weight of maleic acid or maleic anhydride and of from 60 to 80% by weight of acrylic acid and/or methacrylic acid, and from 20 to 40 parts by weight of alkanolamine B have been used for every 100 parts by weight of polymer A.

14. The use of an aqueous composition comprising
A) a polymer which is obtained via free-radical polymerization and which is composed of from 10 to 80% by weight of at least one compound selected from ethylenically unsaturated anhydrides and ethylenically unsaturated dicarboxylic acids, the carboxylic acid groups of which can form an anhydride group, and
B) at least one alkanolamine having at least two hydroxy groups,
in order to produce or to reinforce an oxygen barrier on polymer foils.

15. A process for producing or reinforcing an oxygen barrier effect on a backing substrate selected from polymer foils, where the backing substrate is directly or indirectly coated with an aqueous composition comprising
A) a polymer which is obtained via free-radical polymerization and which is composed of from 10 to 80% by weight of at least one compound selected from ethylenically unsaturated anhydrides and ethylenically unsaturated dicarboxylic acids, the carboxylic acid groups of which can form an anhydride group, and
B) at least one alkanolamine having at least two hydroxy groups,
where, after the coating process, the coated polymer foil with the aqueous composition is dried and heated to at least 130°C.

## Revendications

1. Feuille polymère revêtue, pouvant être préparée par revêtement d'une feuille polymère à l'aide d'une composition aqueuse, contenant
A) un polymère obtenu par polymérisation par voie radicalaire, qui est constitué, à raison de 10 à 80% en poids, par au moins un composé, choisi parmi les anhydrides d'acide éthyléniquement insaturés et les acides dicarboxyliques éthyléniquement insaturés, dont les groupes acide carboxylique peuvent former un groupe anhydride, et
B) au moins une alcanolamine présentant au moins deux groupes hydroxyle.

2. Feuille polymère selon la revendication précédente, la feuille polymère revêtue étant séchée après le revêtement par la composition aqueuse et chauffée à au moins 100°C.

3. Feuille polymère selon l'une quelconque des revendications précédentes, la feuille polymère présentant un revêtement dans lequel le polymère est réticulé via des liaisons ester entre les groupes acides du polymère A et les groupes hydroxyle de l'alcanolamine B.

4. Feuille polymère selon l'une quelconque des revendications précédentes, le polymère étant constitué, à raison de 10 à 80% en poids, d'acide maléique ou d'anhydride de l'acide maléique.

5. Feuille polymère selon l'une quelconque des revendications précédentes, où il s'agit, pour l'alcanolamine, d'un composé NR¹R²R³, dans lequel R¹ représente un atome H, un groupe C₁-C₁₀-alkyle ou un groupe C₁-C₁₀-hydroxyalkyle et R² et R³ représentent un groupe C₁-C₁₀-hydroxyalkyle.

6. Feuille polymère selon l'une quelconque des revendications précédentes, où il s'agit, pour l'alcanolamine, de triéthanolamine.

7. Feuille polymère selon l'une quelconque des revendications précédentes, le rapport molaire des groupes carboxyle et des groupes anhydride d'acide (un groupe anhydride d'acide se calcule comme deux groupes carboxyle) de A) aux groupes hydroxyle de B) valant 20:1 à 1:1.

8. Feuille polymère selon l'une quelconque des revendications précédentes, la composition aqueuse présentant, après séchage et durcissement pendant 15 minutes à 130°C, une teneur en gel supérieure à 50% en poids.

9. Feuille polymère selon l'une quelconque des revendications précédentes, le revêtement présentant une épaisseur d'au moins 0,5 µm.

10. Feuille polymère selon l'une quelconque des revendications précédentes, le matériau support de la feuille polymère étant choisi parmi le poly(téréphtalate d'éthylène), le polypropylène orienté, le polyéthylène et les copolyesters aliphatiques-aromatiques biodégradables.

11. Feuille polymère selon l'une quelconque des revendications précédentes, la feuille polymère étant un emballage ou une partie d'un emballage.

12. Feuille polymère selon l'une quelconque des revendications précédentes, la feuille polymère étant en outre revêtue par au moins une couche d'adhésif ou de scellage.

13. Feuille polymère selon l'une quelconque des revendications précédentes, le polymère A étant constitué, à raison de 20 à 40% en poids, d'acide maléique ou d'anhydride de l'acide maléique et, à raison de 60 à 80% en poids, d'acide acrylique et/ou d'acide méthacrylique et 20 à 40 parties en poids d'alcanolamine B étant utilisées par rapport à 100 parties en poids de polymère A.

14. Utilisation d'une composition aqueuse contenant
A) un polymère obtenu par polymérisation par voie radicalaire, qui est constitué, à raison de 10 à 80% en poids, par au moins un composé, choisi parmi les anhydrides d'acide éthyléniquement insaturés et les acides dicarboxyliques éthyléniquement insaturés, dont les groupes acide carboxylique peuvent former un groupe anhydride, et
B) au moins une alcanolamine présentant au moins deux groupes hydroxyle
pour générer ou renforcer une barrière contre l'oxygène sur des feuilles polymères.

15. Procédé pour générer ou renforcer un effet barrière contre l'oxygène sur un substrat support, choisi parmi les feuilles polymères, le substrat support étant revêtu directement ou indirectement par une composition aqueuse, contenant
A) un polymère obtenu par polymérisation par voie radicalaire, qui est constitué, à raison de 10 à 80% en poids, par au moins un composé, choisi parmi les anhydrides d'acide éthyléniquement insaturés et les acides dicarboxyliques éthyléniquement insaturés, dont les groupes acide carboxylique peuvent former un groupe anhydride, et
B) au moins une alcanolamine présentant au moins deux groupes hydroxyle,
la feuille polymère revêtue étant séchée après le revêtement par la composition aqueuse et chauffée à au moins 130°C.
